# EUROPEAN PATENT APPLICATION

(11) **EP 3 402 183 A1**
(43) Date of publication of application: **14.11.2018**
(21) Application number: 17735962.7
(22) Date of filing: 05.01.2017
(51) Int. Cl.: H04N 5/64, G02B 27/02, G09F 9/00

(54) **HEAD-MOUNTED DISPLAY**

(30) Priority: 08.01.2016 JP 2016002447
(71) Applicant: Brother Kogyo Kabushiki Kaisha, Nagoya-shi, Aichi 467-8561 (JP)
(72) Inventor: KUSUDA Miyuki, Nagoya-shi Aichi 467-8561 (JP)
(74) Representative: J A Kemp
(86) International application number: PCT/JP2017/000082
(87) International publication number: WO 2017/119425

(57) **Abstract**

The present diclosures provides a head-mounted display capable of suppressing the supporting member which supports the reflective member such as a half mirror from obstracting the user's viewing field, and capable of stably supporting the reflective member. A head-mounted display includes a casing 3 having an upper wall 31 and a lower wall 32 opposing to each other in an up-down direction, an image light generator configured to emit image light leftward, and a half mirror 50 configured to reflect the image light, the half mirror 50 being capable of reflecting the image light emitted from the image light generator rearward with a reflective surface 50A. The upper wall 31 has a protruding portion 310 formed to extend over both sides, in the right-left direction, of the reflective surface 50A of the half mirror 50. A position of the half mirror 50 is positioned based on the protruding portion 310. A surface area of a portion of the lower wall overlappling the half mirror 50 is smaller than a surface area of a portion of the upper wall 31 overlapping the half mirror 50.

## Description

### TECHNICAL FIELD

The present disclosures relate to a head-mounted display to be mounted on a head of a user.

### BACKGROUND ART

There has been known a head-mounted display (hereinafter, referred to as an HMD) configured to project an image within a part of a viewing field of a user. An HMD described in Patent Document 1 has a main body part and an emission port part. The main body part has an LCD and an ocular optical member accommodated therein. The emission port part is detachably/attachably held by the main body part. The emission port part has a half mirror, an upper horizontal dege and a lower horizontal edge. The half mirror reflects image light of an image displayed on the LCD toward the eye of the user. The upper horizontal edge and the lower horizontal edge rotatably support the half mirror from upper and lower sides thereof.

### PRIOR ART DOCUMENT

### PATENT DOCUMENTS

[Patent Document 1] Japanese Patent Provisional Publication No. 2013-44830

### SUMMARY OF THE INVENTION

### PROBLEM TO BE SOLVED

When the user wearing the HMD above directs the viewing field downward, it is likely that the lower horizontal dedge obstracts the viewing field. To deal with this, a method may be considered to suppress the lower horizontal edge obstracting the viewing field by downsizing the lower horizontal edge. However, in such a method, following problems may arise. In the above HMD, since the force of gravity acts downward on the half mirror, the half minor is mainly supported by the lower horizontal edge from below. The upper horizontal edge only serves to restrict movement of the rotataional axis when the half mirror is rotating. Therefore, if the lower horizontal edge is downsized, it is possible that the half mirror may not be stably supported by the lower horizontal edge. If the lower horizontal edge is downsized, an exposed area of the half mirror may increase. In such a case, the half mirror may easily receive an external impact. If the half mirror receives the external impact and is displaced, user's visibily of the image light may be lowered.

An object of the present diclosures is to provide a head-mounted display capable of suppressing the supporting member which supports the reflective member such as a half mirror from obstracting the user's viewing field, and capable of stably supporting the reflective member.

### MEANS FOR SOLVING THE PROBLEM

A head-mounted display according to the present disclosures includes a casing having at least a first wall and a second wall opposing to each other in a first direction, an image light generator arranged inside the casing between, in relation to the first direction, the first wall and the second wall, and configured to emit image light in a second direction which is perpendicular to the first direction, and a reflective member having a reflective surface to reflect the image light, the reflective surface being parallel to the first direction. The reflective member is arranged on one side in the second direction with respect to the image light generator, and the reflective member is configured to reflect, with the reflective surface, the image light emitted from the image light generator to one side in a third direction which intersects with both the first direction and the second direction. The first wall has a protruding protion formed to extend over both sides, in the second direction, of the reflective surface of the reflective member. A position of the reflective member in the first direction is positioned based on a second wall side surface, in the first direction, of the protruding porition. A second surface area which is a surface area of a portion of the second wall overlapping the reflective member is smaller than a first surface area which is a surface area of a portion of the first wall overlapping the reflective member in the first direction.

The head-mounted display includes the casing having at least the first wall and the second wall. The image forming part is arranged between the first wall and the second wall of the casing. The reflective member reflects the image light emitted from the image forming part with the reflective surface. Therefore, when the image light reflected by the reflective surface of the reflective member is emitted toward an eye of a user, the user can recognize an image.

The second surface area of the second wall of the casing overlapping the reflective member is smaller than the first surface area of the first wall of the casing overlapping the reflective member. Therefore, as compared to a case where the first surface area and the second surface area are made substantially the same, relatively wide areas of a second wall side of the reflective member can be exposed. Therefore, when, for instance, the user wears the head-mounted display in a state where the first wall is arranged on the upper side and the second wall is arranged on the lower side, even if the user directs the viewing field downward, the second wall hardly obstructs the viewing field. Accordingly, in the head-mounted display, the user's visibility can be secured.

It is possible that the reflective member becomes unstable at the second wall side as the second surface area becomes smaller than the first surface area. However, in the head-mounted display, the reflective surface is positioned by the protruding portion of the first wall. Therefore, in the head-mounted display, even if, for instance, the user wears the head-mounted display in a state where the first wall is arranged on the upper sude and the second wall is arranged on the lower side, the position of the reflective member at a first wall side can be stabilized.

Further, the protruding portion of the first wall is arranged to extend over both sides, in the second direction, of the reflective surface of the reflective member. Therefore, in the head-mounted display, an external impact can be suppressed from directly acting on the reflective member with the protruding portion. Accordingly, in the head-mounted display, displacement of the position of the reflective member due to the external impact with the protruding protion can be suppressed.

In the present disclosure, the head-mounted display may further include a first holding part configured to hold one of both ends, in the first direction, of the reflective member neighboring the protruding portion with respect to the protruding portion. In such a case, an end, in the first direction, of the reflective member is held with respect to the protruding portion by the first holding part. Accordingly, in the head-mounted display, user's visibility of the image light can be maintained by stabilizing the position of the reflective member with respect to the casing in the first direction.

In the present disclosure, the head-mounted display may further include a second holding part configured to hold at least one of both ends, in the second direction, of the reflective member with respect to the casing. In such a case, an end, in the second direction, of the reflective member is held with respect to the casing by the second holding part. Accordingly, in the head-mounted display, user's visibility of the image light can be maintained by stabilizing the position of the reflective member with respect to the casing in the second direction.

In the present disclosure, the first wall may be configured such that the first wall is dividable into a first main wall on another side in the second direction and a first protruding wall on the one side in the second direction, the image light generator being covered with the first main wall, and the protruding portion being included in the first protruding wall. The head-mounted display may further include a holder detachably attached to the casing, the one side in the first direction of the holder being formed by the first protruding wall, and the other side in the first direction of the holder being formed by a frame arranged on the other side in the second direction with respect to the second wall. The reflective member may be positioned by the protruding portion of the first protruding wall of the holder. In such a case, in the head-mounted display, a type of the reflective member can easily be changed by replacing the holder. The frame of the holder is arranged on the other side in the second direction with respect to the second wall of the casing, and does not protrude toward the one side in the second direction with respect tot the second wall. Therefore, when, for instance, the user wears the head-mounted display in a state where the first wall is arranged on the upper side and the second wall is arranged on the lower side, even if the user directs the viewing field downward, the frame hardly obstructs the viewing field. Accordingly, in the head-mounted display, the user's visibility can be secured. It is noted that, when the holder is detached from the casing, there is a case where the reflective member is likely to receive impacts. However, the first protruding wall is provided to the holder, and the reflective member is positioned by the protruding portion of the first protruding wall. That is, the protruding portion is arranged to extend over both sides, in the second direction, of the reflective surface of the reflective member. Accordingly, the holder can suppress an external impact from directly acting on the reflective member with the protruding portion even when the holder is detached from the casing.

In the present disclosure, the head-mounted display may further include a holder detachably mounted to the casing, the holder having the second holding part and holding an end, on the another side in the second direction, of the reflective member with the second holding part. The second holding part may have a contacting part which contacts the reflective member and a projection protruded from the contacting part, and the reflective member may have a hole in which the projection is fitted. In such a case, in the head-mounted display, a type of the reflective member can easily be changed by replacing the holder. By fitting the projection of the second holding part in the hole of the reflective member, movement in the rotational direction about the fist direction of the reflective member with respect to the holder is restricted. Accordingly, in a case where an external impact acts on the holder with the holder being detached from the casing, it is possible to suppress the reflective member being displaced with respect to the holder.

In the present disclosure, the head-mounted display may further include a mounting fixture to be worn by the user, and a connection fixture connecting the mounting fixture with the casing. The connecting fixture may be provided to the casing at the other side in the second direction with respect to a center in the second direction. In such a case, the user can visually recognize the image light by wearing the mounting fixture and placing the reflective member of the head-mounted display in front of one eye. Even in the above case where the user places the reflective member of the head-mounted display in front of one eye, the reflective member is positioned by the protruding portion of the first wall. Accordingly, in the head-mounted display, the position of the reflective member can be stabilized. Further, the protruding portion of the first wall is arranged to extend over both sides, in the second direction, of the reflective member. Therefore, in the head-mounted display, an external impact can be suppressed from directly acting on the reflective member with the protruding portion. Accordingly, even in the head-mounted display configured such that the user places the reflective member in front of one eye, displacement of the reflective member due to the external impact can be suppressed with the protruding protion.

In the present disclosure, at least a part of the reflective member may be convered with a cover member, and transparency of the conver member may be higher than the transparency of the first wall. In such a case, even if relatively wide areas of the reflective member is exposed, an impact resistant property of the reflective member can be maintained with the cover member. It is noted that, in order to suppress the cover member obstructing the viewing field of the user when the reflective member is covered with the cover member, it is preferable that the transparency of the cover member is higher. On the other hand, regarding the first wall, it is preferable that the transparency thereof is lower so that the external light is prevented from entering the reflective member. In this regard, the head-mounted display is configured such that the transparency of the conver member is higher than the transparency of the first wall. Accordingly, in the head-mounted display, the cover member can be suppressed from obstructing the viewing field of the user, while suppressing incidence of the external light on the reflective member with the upper wall 31.

In the present disclosure, the reflective member may be arranged on the other side in the second direction with respect to an imaginary line connecting an end part, on the one side in the second direction, of the first wall and an end part, on the one side in the second direction, of the second wall. In such a case, in the head-mounted display, it can be suppressed with the first wall and the second wall that an external object contacts the reflective member. Accordingly, in the head-mounted display, displacement of the position of the reflective member in response to contact of an external object to the reflective member with the first wall and the second wall can be suppressed.

In the present disclosure, the casing may be attached to the mounting fixture such that the first wall is closer to a top of a head of the user than the second wall. In such a case, the head-mounted display is worn by the user in a state where the first wall is arranged on the upper side and the second wall is arranged on the lower side. Therefore, even if the user directs the viewing field downward, the second wall hardly obstructs the viewing field. Accordingly, in the head-mounted display, the user's visibility can be secured.

### BRIEF DESCRIPTION OF THE DRAWINGS

[Fig. 1] Fig. 1 is a perspective view of an HMD 1.
[Fig. 2] Fig. 2 is a left side view of the HMD 1.
[Fig. 3] Fig. 3 is a perspective view of an image display device 10.
[Fig. 4] Fig. 4 is a front view of the image display device 10.
[Fig. 5] Fig. 5 is an exploded perspective view of the image display device 10.
[Fig. 6] Fig. 6 is a perspective view of the holder 5.
[Fig. 7] Fig. 7 is a perspective view of a holder 5.
[Fig. 8] Fig. 8 is a ftont view of a half mirror 50.
[Fig. 9] Fig. 9 is a perspective view of the holder 5 and the half mirror 50.
[Fig. 10] Fig. 10 is a perspective view of the holder 5 and the half mirror 50.
[Fig. 11] Fig. 11 is a perspective view of a holder 80 according to a first modification.
[Fig. 12] Fig. 12 is a perspective view of the holder 80 and a half mirror 58 according to the first modification.
[Fig. 13] Fig. 13 is a perspective view of an image display device 60 (in a state where a holder 9A is attached to a casing 6A) according to a second modification.
[Fig. 14] Fig. 14 is an exploded perspective view of the image diaply device 60 (in a state where the holder 9A is separated from the casing 6A) according to the second modification.
[Fig. 15] Fig. 15 is a perspective view of the image display device 60 (in a state where the holder 9A is attached to the casing 6A) according to the second modification.
[Fig. 16] Fig. 16 is a perspective view of an image display device 10A according to a third modification.
[Fig. 17] Fig. 17 is a perspective view of a half mirror 50 and a cover member 11 according to a fourth modification.

### DESCRIPTION OF THE EMBODIMENTS

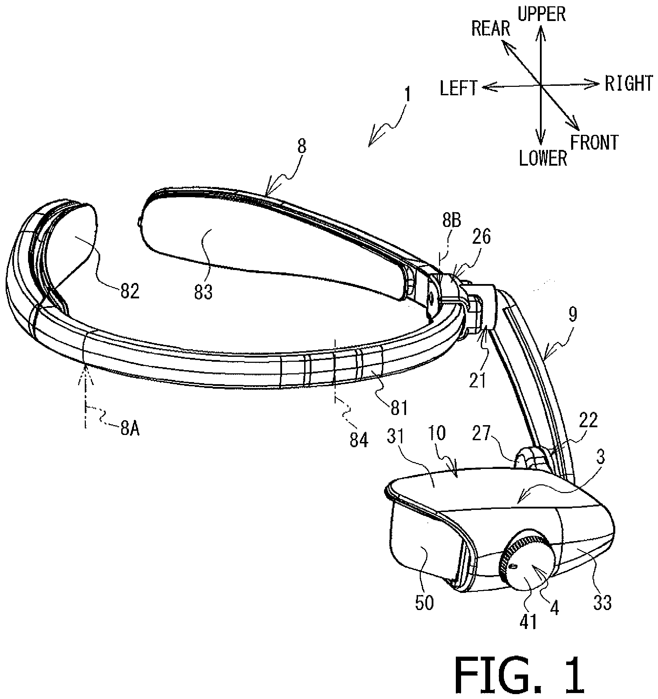

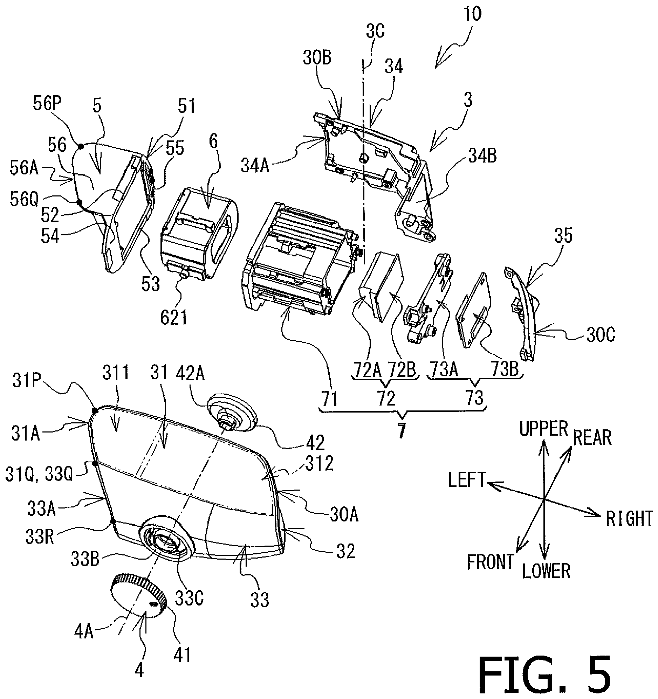

Hereinafter, referring to the drawings, an embodiment of the present disclosures will be described. As shown in Fig. 1, a head-mounted display (hereinafter, referred to as an "HMD") 1 is an optical transmission type see-through HMD. Light of a scenery in front of the eyes of a user passes through a half mirror 50 and is direcly direted to an eye of the user. A projection type of the HMD 1 is a virtual image projection type. The half mirror 50 reflects light of an image displayed on a liquid crystal panel 72B (see Fig. 5, described later) toward one eye of the user. The HMD 1 is capable of making the user recognize the scenery in front of the user's eyes with the image superimposed. The HMD 1 has a mounting fixture 8, a connection fixture 9, ball joints 21 and 22, and an image display device 10.

Hereinafter, in order for easy understanding of the description of the drawings, an upper side, a lower side, a left side, a right side, a front side and a rear side of the image display device 10 will be defined. The upper side, the lower side, the left side, the right side, the front side and the rear side of the image display device respectively correspond, for example, to an upper side, a lower side, a left side, a right side, a diagonally lower right side and a diagonally upper left side indicated in Fig. 1. It is noted that the upper side, the lower side, the left side, the right side, the front side and the rear side of the image display device 10 respectively correspond to an upper side, a lower side, a right side, a left side, a front side and a rear side of the user to whom the mounting fixture 8 is mounted.

### < Mounting Fixture 8, Connection Fixture 9 >

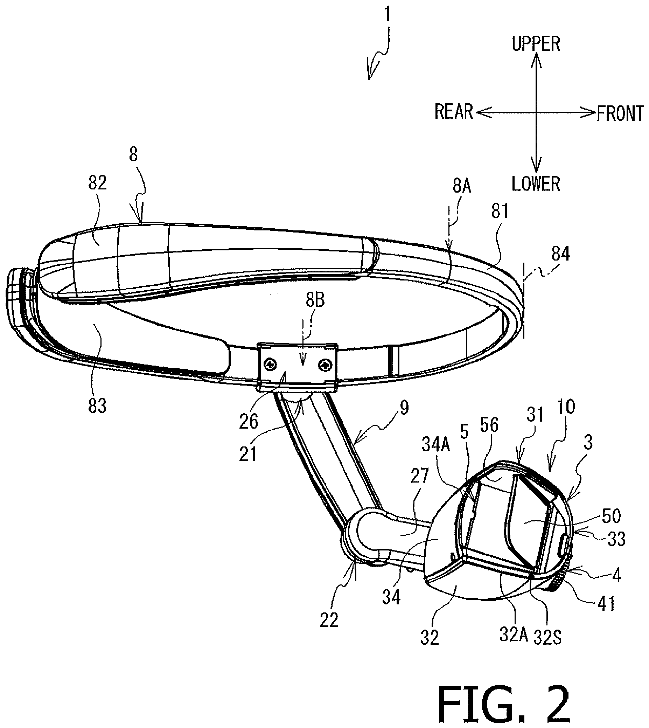

As shown in Figs. 1 and 2, the mounting fixture 8 is configured with material having flexibility such as resin or metal (e.g., stainless steel). The mounting fixture 8 has a first section 81 and second sections 82 and 83. It is noted that, in the following description, to facilitate understanding, the mounting fixture 81 will be divided into the first section 81 and the second sections 82 and 83, and described separately. However, the mounting fixture 8 is not divided into the first section 81 or the second sections 82 and 83, but is an integral member as a whole.

Each of the first section 81 and the second sections 82 and 83 is a curved elongated plate-like member. The first section 81 is a portion extending in the right-left direction between a position 8A and a position 8B of the moutning fixture 8. The first section 81 is convexly curved frontward. The position 8A is located on the left side with respect to a center 84, in the right-left direction, of the mounting fixture 8. The position 8B is located on the right side with respect to the center 84, in the right-left direction, of the mounting fixture 8. The second section 82 is a portion of the mounting fixture 8 extending rearward from the position 8A. The second section 83 is a portion of the mounting fixure 8 extending rearward from the position 8B. The second sections 82 and 83 extend in directions where rear ends thereof approach each other. The mounting fixture 8 is worn on the head of the user in a state where the first section 81 and the second sections 82 and 83 contact a frontal region, a right temporal region and a left temporal region of the user, respectively. In this state, the first section 81 extends, along a forehead of the user, in the right-left direction. In the following description, a side of the mounting fixture 8 surrounded by the first section 81 and second sections 82 and 83 will be referred to as an "inner side of the mouting fixture 8," while a side opposite to the inner side of the mounting fixture 8 will be referred to as an "outer side of the mounting fixture 8."

The connection fixture 9 is a substantially rod-shaped member. The connection fixture 9 is configured, for example, with a resin or a metal. The connection fixture 9 extends in the up-down direction when viewed from the front. Specifically, as shown in Fig. 2, the connection fixture 9 extends in a direction such that a lower end inclines frontward with respect to the up-down direction. An upper end of the connection fixture 9 is connected to the mounting fixture 8 through the ball joint 21 and the connection member 26. A lower end of the connection fixture 9 is connected to the image display device 10 through the ball joint 22 and the connection member 27.The image display decvice 10 is connected to the mounting fixture 8 through the connection fixture 9. The connection fixture 9 holds the image display device 10 at a position spaced from the mounting fixture 8. In a state where the mounting fixture 8 is worn on the head of the user, with the connection fixture 9, the half mirror 50 of the image display device 10 can be located in front of the left eye of the user.

### < Ball Joints 21, 22 >

Each of the ball joints 21 and 22 is configured to be movable with three degrees of freedom. Each of the ball joints 21 and 22 has a not-shown socket, and a ball stud including a sphere section and a rod section. The mounting fixture 8 and the connetion fixture 9 are connected with the ball joint 21. The image display device 10 and the connection fixture 9 are connected with the ball joint 22.

The socket of the ball joint 21 is connected to the connection member 26. The connection member 26 contacts an inner part, an outer part and an upper part at the position 8B of the mounting fixture 8. The connection member 26 is detachably attached to the mounting fixture 8. The sphere section of the ball stud of the ball joint 21 is rotatably held by the socket connected to the connection member 26. The rod section of the ball stud of the ball joint 21 extends rightward from the sphere secton, and is connected to the upper end of the connection fixture 9. The ball joint 21 rotatably connects the connection member 26 with the connection fixture 9.

The socket of the ball joint 22 is connected to a right surface of at a rear end of the connection member 27. The connection member 27 is connected to a rear wall 34 (see Fig. 2) of the image display device 10. The connection member 27 is a substantially prism-shaped member extending in the front-rear direction. The sphere section of the ball stud of the ball joint 22 is rotatably held by the socket connected to the connection member 27. The rot section of the ball stud of the ball joint 22 extends ritghtward from the sphere section, and is connected to the lower end of the connection fixture 9. The ball joint 22 rotatably connects the connection member 27 with the connection fixture 9.

### < Image Display Device 10 >

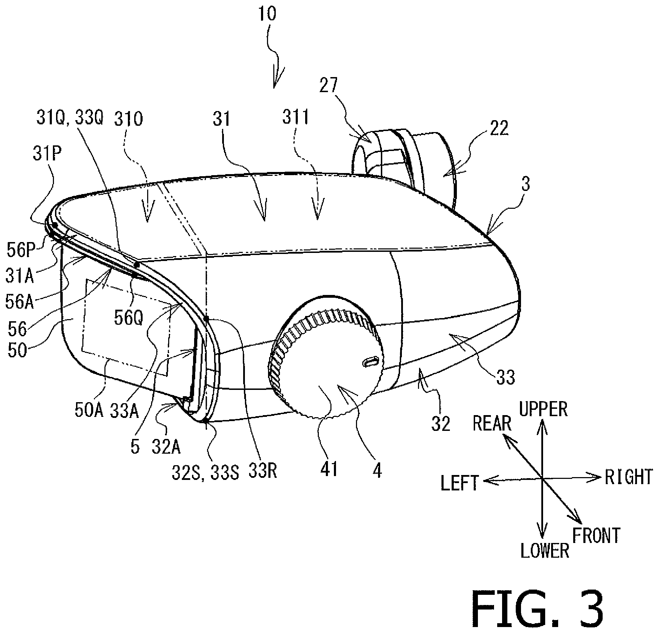

Referring to Figs. 3 - 5, the image display device 10 will be described. The image display device 10 has a casing 3, an adjustment mechanism 4, a holder 5, a half mirror 50, a lens unit 6 (see Fig. 5) and an image unit 7 (see Fig. 5).

### < Casing 3 >

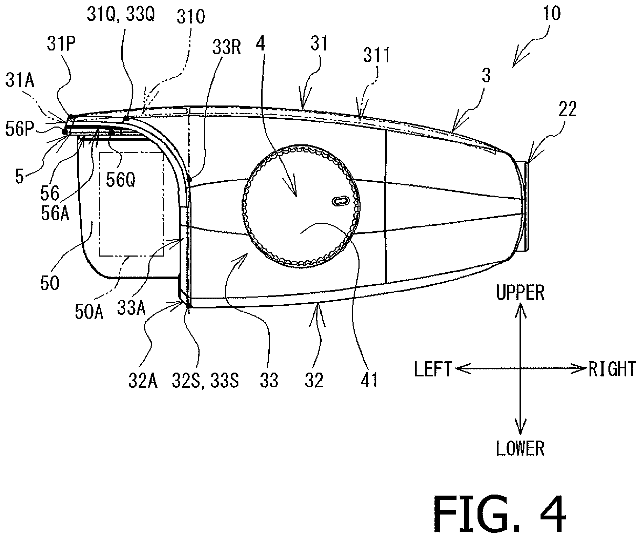

As shown in Figs. 3 and 4, the casing 3 has a substantially rectangular parallelepiped shape with its corners being rounded. The casing 3 has a hollow box shape. Walls on an upper side, a lower side, a front side, a rear side and a right side of the casing 3 will be referred to as an upper wall 31, a lower wall 32, a front wall 33, a rear wall 34 (see Fig. 5) and a right wall 35 (see Fig. 5), respectively. A main part 311 of the upper wall 31, which will be described later, and the lower wall 32 face each other in the up-down direction. The front wall 33 and the rear wall 34 face each other in the front-rear direction. A left side of the caing 3 is opened. The lens unit 6 and the image unit 7, which will be described later, are arranged between the main part 311 of the upper wall 31 and the front wall 33 in the up-down direction, and between the front wall 33 and the rear wall 34 in the front-rear direction. The upper wall 31, the lower wall 32 and the front wall 33 are curved in the vicinities of portions where the walls are connected, and are connected continuously and steplessly. As shown in Fig. 5, the casing 3 is formed by combining a first casing 30A, a second casing 30B and a third casing 30C. The first casing 30A has the upper wall 31, the lower wall 32 and the front wall 33. The second casing 30B has the rear wall 34. The third casing 30C has the right wall 35.

As shown in Figs. 3 and 4, a left end 31A of the upper wall 31 is located on the left side with respect to a left end 32A of the lower wall 32 and a left end 33A of the front wall 33. As shown in Fig. 3, the left end 31A of the upper wall 31 protrudes leftward the most at a position 31P nearby the rear end. The left end 31A inclines, in a diagonally frontward right direction, from the position 31P nearby the rear end toward a front end position 31Q.

As shown in Fig. 4, an upper end position 33Q of the left end 33A of the front wall 33 conincides with the position 31Q of the left end 31A of the upper wall 31. The left end 33A extends from the position 33Q of the upper end toward a position 33R which is on an upper side with respect to the center in the up-down direction, with being curved toward a diagonally lower right direction. The left end 33A extends linearly and downwardly from the position 33R toward a position 33S nearby the lower end.

A front end position 32S of the left end 32A of the lower wall 32 coincides with the postion 33S of the front wall 33. As shown in Fig. 2, the left end 32A extends linearly rearward from the front end position 32S toward a rear end. The rear end of the left end 32A is connected to the lower end of the left end 34A of the rear wall.

As shown in Fig. 3, the left end part of the upper wall 31 prtorudes leftward with respect to the lower wall 32, the front wall 33 and the rear wall 34. In the following description, a portion of the upper wall 31 protruding leftward with resepct to the lower wall 32, the front wall 33 and the rear wall 34 will be referred to as a "protruding portion 310". The protruding portion 310 corresponds to a portion of the upper wall 31 arranged on the left side, in the right-left direction, with respect to the positions 33R and 33S of the left end 33A of the front wall 33. A portion of the upper wall 31 other than the protruding portion 310 will be referred to as a main part 311. The main part 311 corresponds to a portion of the upper wall 31 arranged on the right side, in the right-left direction, with respect to the positions 33R and 33S of the left end 33A of the front wall 33.

It is noted that a lower part, details of which will be described later, of the protruding portion 310 of the upper wall 31 is configured with an upper wall 56 of the holder 5 which will be described later. That is, the protruding portion 310 of the upper wall 31 is formed integrally with the upper wall 56 of the holder 5. Below the protruding portion 310 of the upper wall 31, the half mirror 50 is arranged.

As shown in Fig. 5, on a right end portion of the rear wall 34 and on a right side portion with respect to the center 3C, in the right-left direction, of the casing 3, a connection section 34B for connecting the connection member 27 (see Fig. 2) is provided. The connection member 27 connected to the connection section 34B protrudes rearward from the rear wall 34. Accordingly, the casing 3 is held by the connection fixture 9 through the connection member 27 and the ball joint 22 at a right side part with respect to the center 3C, in the right-left direction, of the casing 3.

### < Image Unit 7 >

As shown in Fig. 5, the image unit 7 has a first holding member 71, a liquid crystal display device 72, and a second holding member 73. The first holding member 71 holds the liquid crystal display device 72, which will be described later, by a right end thereof. The first holding member 71 has a hollow prisim-shaped member, of which both right and left ends are opened, on a left side of a portion holding the liquid crystal display device 72. The first holding member 71 is held at a fixed position with respect to the casing 3.

The liquid crystal display device 72 has a glass substrate 72A and a liquid crystal panel 72B. the liquid crystal panel 72B is a well-known liquid crystal panel having a rectangular shape. The liquid crystal panel 72B generates the image light by displaying an image on its left surface. The glass substrate 72A is arranged on the left side with respect to the liquid crystal panel 72B, and protects a display surface of the liquid crystal panle 72B. For example, when the liquid crystal panel 72B is of a reflection type crystal panel, light from a not-shown light source is incident on the liquid crystal panel 72B. The liquid crystal panel 72B generates the image light by reflecting the incident light. The image light generated by the liquid crystal panel 72B passes through the galss substrate 72A leftward. The image light then enters inside the first holding member 71 for the right end, and is emitted leftward from the left end thereof.

The second holding member 73 has a substrate holding part 73A and a control substrate 73B. The substrate holding part 73A is arranged on the right side with respect to the liquid crystal display device 72. The control substrate 73B is arranged on the right side of the substrate holding part 73A. The control substrate 73B is connected to the liquid crystal palne 72B through a not-shown flexible printed substrate. The control substrate 73B outputs a control signal to the liquid crystal panel 72B through the flexible printed substrate, thereby image being displayed on the liquid crystal panel 72B.

### < Lens Unit 6 >

The lens unit 6 is arranged on the left side with respect to the image unit 7. The lens unit 6 is a hollow member of which both right and left sides are opened. The lens unit 6 contains a not-shown plurality of lenses thereinside. The image light generated by the image unit 7 enters the lens unit 6 from its right end, and is emitted leftward from the left end thereof. The plurality of lenses converge the image light incident from the right side. The lens unit 6 has a convex portion 621, which protrudes frontward, on its front surface. The convex portion 621 is fitted in a cam groove formed on a rear surface of an adjustment part 42 of an adjustment mechanism 4 which will be described later. The lens unit 6 is moveable in the right-left direction.

### < Adjustment Mechanism 4 >

The adjustment mechanism 4 is arranged on the front side with resepct to the lese unit 6. The adjustment mechanism 4 has an operation part 41 and an adjustment part 42. The operation part 41 has a circular plate shape. One surface of the operation part 41 is directed frontward, while the other surface faces rearward. The operaton part 41 fitted in an annular groove 33B formed on the front wall 33 of the casing 3 from the front side. The operation part 41 is rotatable about a rotational axis 4A extending in the front-rear direction.

The adjustment part 42 has a circular plate shape. The adjsustment part 42 has a protruding portion 42A which protrudes frontward from near by the center of the circular shape. The protruding portion 42A enters a hole 33C, which is pierced in the front-rear direction passing the center of the groove 33B of the front wall 33, from the rear side, and is connected to the rear surface of the operation part 41. The operation part 41 and the adjustment part 42 sandwitch the front wall 33 from the front and rear sides. The adjustment part 42 is rotatable integrally with the operation part 41. On the rear surface of the adjustment part 42, a not-shown cam groove is formed. The cam groove is formed as a part of the rear surface of the adjustment part 42 is depressed frontward. The cam groove extends spirally about a cener of the circular shape of the adjustment part 42. In the cam groove, the convex portion 621 of the lens unit 6 is fitted from the rear side.

When the adjustment part 42 rotates in accordance with rotation of the operation part 41, the cam groove acts a force on the convex portion 621 of the lens unit 6. When the adjustment part 42 roates clockwise when viewed from the front side, the lens unit 6 moves rightward. When the adjustment part 42 rotates counterclockwise when viewed from the front side, the lens unit 6 moves leftward. A distance between the plurality of lenses held by the lens unit 6 and the image unit 7 changes in accordance with the roattion of the adjustment part 42. It is noted that, when the distance between the plurality of lenses and the image unit 7 is changed, a spread angle of the image light, which forms the virtual image visually recognized by the user, is also changed. Therefore, the user can perform a focusing adjustment by rotating the operation part 41.

### < Holder 5 >

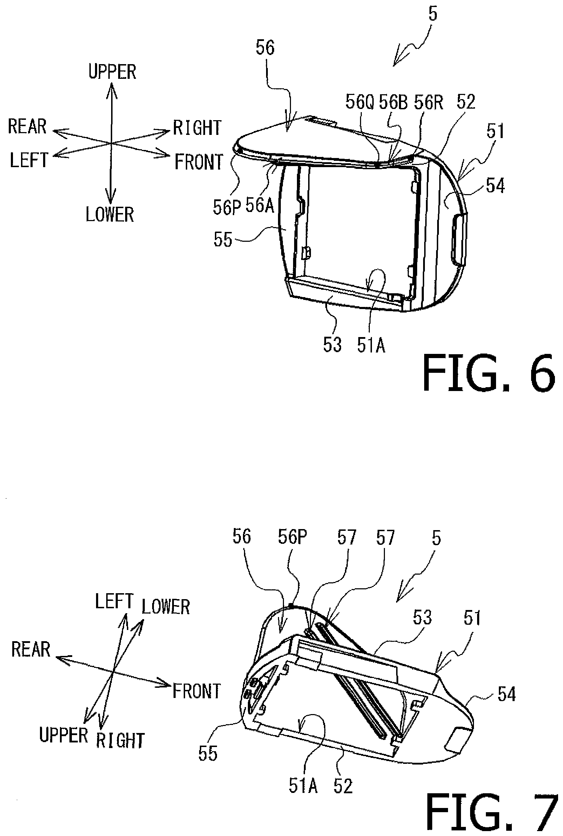

The holder 5 is arranged on the left side with respect to the lens unit 6. The holder 5 is detachably attaed to the casing 3. As shown in Figs. 6 and 7, the holder 5 has a base part 51 and an upper wall 56. The shape of the base part 51 is substantially a plate shape formed with a rectangular opening 51A. Surfaces of the base part 51 face the right-left direction. The base part 51 has an upper frame 52, a lower frame 53, a front frame 54 and a rear frame 55. The upper frame 52, the lower frame 53, the front frame 54 and the rear frame 55 respectively correspond to an upper side, a lower side, a front side and a rear side portions of the opening 51A, of the based part 51. The upper frame 52 and the lower frame 53 extend in the front-rear direction. The front frame 54 and the rear frame 55 extend in the up-down direction. A front end of the upper frame 52 and a front end of the lower frame 53 are connected to an upper end and a lower end of the front frame 54, respectively. A rear end of the upper frame 52 and a rear end of the lower frame 53 are connected to an upper end and a lower end of the rear frame 55, respectively.

The upper wall 56 extends leftward from an upper end of the base part 51. The upper wall 56 has a plate shape. The surfaces of the upper wall 56 face in the up-down direction. The upper frame 52 corresponds to a right end portion of the upper wall 56. As shown in Fig. 6, a left end 56A of the upper wall 56 protrudes leftward the most at a position 56P nearby the rear end thereof. The Left end 56A inclines, in a diagonally frontward direction, from the position 56P nearby the rear end toward the front end position 56Q. A front end 56B of the upper wall 56 linearly extends rightward from the position 56Q of the left end 56A toward a right end position 56R. A shape of a portion between the position 56P to the position 56Q of the left end 56A of the upper wall 56 is substantially the same as a shape of a portion between the position 31P to the position 31Q of the left end 31A of the upper wall 31 of the casing 3 (see Figs. 3 - 5).

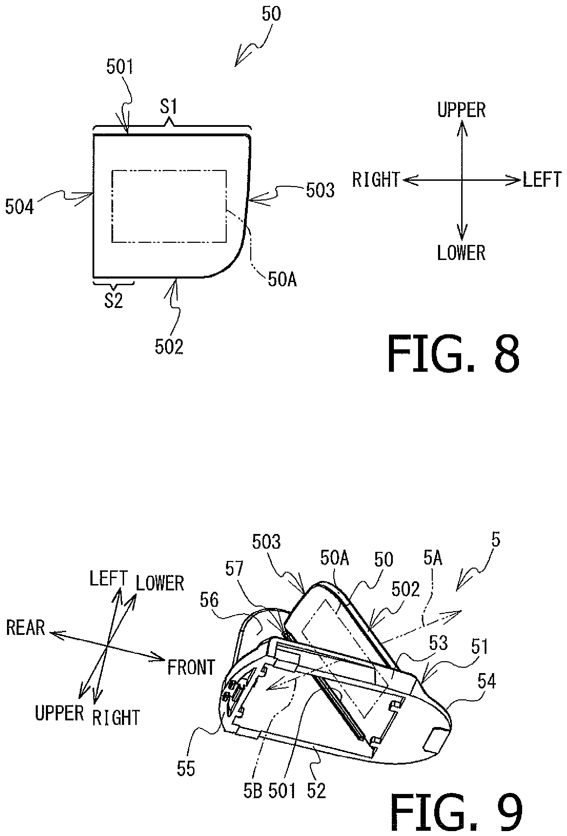

As shown in Fig. 7, on a lower surface of the upper wall 56, two first holding prts 57 are provided. The two first holding parts 57 protrude downward from the lower surface of the upper wall 56. The two first holdng parts 57 linearly extend from the position 56P toward the position 56R of the upper wall 56 (see Fig. 6). That is, the two first holding part 57 extend, along the lower srufce of the upper wall 56, from a diagonally right front side toward a diagonaly left rear side. The upper wall 56 is arranged to extend over the two first holding parts 57 in the right-left direction. The two first holding parts 57 are spaced from each other. A length of the two first holding parts 57 is approximately the same as a length of an upper end 501 (see Fig. 8, described later) of the half mirror 50, which will be described later. A length between the two first holding parts 57 is approximlately the same as a thickness of the half mirror 50 (see Fig. 9).

### < Half Mirror 50 >

As shown in Fig. 8, the half mirror 50 has a substantially rectangular shape. At an upper right corner where an upper end 501 and a right end 504 of the half mirror 50 intersect with each other, the upper end 501 and the right end 504 are perpendicular to each other. A lower left comer where a lower end 502 and a left end 503 of the half mirror 50 intersect with each other is curved. The half mirror 50 has a rectangular reflective surface 50A on its rear surface (closer side with respect to a plane of Fig. 8). The reflective surface 50A is formed, for example, by evaporating a metal such as aluminum or silver on a transparent substrate made of resin glass so as to have a predetermined reflectivity (e.g., 50 %). The reflective surface 50A refelects a part (e.g., 50 %) of incident light, while allows the other part (e.g. 50 %) of the incident light to pass therethrough.

As shonw in Fig. 9, the half mirror 50 is arranged below the upper wall 57 of the holder 5. The upper wall 56 of the holder 5 covers over the half mirror 50. The upper end 501 of the half mirror 50 contacts the upper wall 56, and the lower end 502 is separated from the upper wall 56. The upper end 501 of the half mirror 50 is arranged along a portion between the two first holding parts 57 on the upper wall 56 of the holder 5. The upper end 501 of the half minor 50 is sandwiched by the two first holding parts 57 from the both surface sides. The half mirror 50 is fixed with adhesive agent onto the portion sandwiched by the two first holding parts 57. With this configuration, the half mirror 50 is held on the lower surface of the upper wall 56 of the holder 5. The right end 504 of the half mirror 50 is arranged along a left surface of the front frame 54 of the holder 5.

A direction which perpendicularly intersects with each surface of the half mirror 50 inclines with respect to the front-rear direction. A direction 5A which perpendicularly intersects with the front surface of the half mirror 50 and extends frontward is directed to a diagonally left front side. A direction 5B which perpendicularly intersects with the rear surface of the half mirror 50 and extends rearward is directed to a diagonally right rear side. The reflective surface 50A on the rear surface of the half mirror 50 is arranged in parallel with the up-down direction. It is notedt that, as described above, the upper wall 56 of the holder 5 is arranged to extend over the two first holding parts 57 in the right-left direction (see Fig. 7). Accordingly, the upper wall 56 of the holer 5 is arranged to extend over both sides, in the right-left direction, of the reflective surface 50A of the half mirror 50 held by the two first holding parts 57.

### < Attachment of Holder 5 to Casing 3 >

As shown in Figs. 3 and 4, the holder 5 holding the half minor 50 is attached to the upper wall 31 of the casing 3 at a position below the protruding prtion 310. A front end of the front frame 54 (see Fig. 6) of the base part 51 of the holder 5 contacts a neighborhood of a portion extending between the positions 33R and 33S of the left end 33A of the rear surface of the front wall 33 of the casing 3 from the rear side. A rear end of the rear frame 55 (see Fig. 6) of the base part 51 of the holder 5 contacts a neighborhood of the left end 34A (see Fig. 5) of the front surface of the rear wall 34 (see Fig. 5) of the casing 3 from the front side. The holder 5 is positioned by the left end parts of the front wall 33 and the rear wall 34 of the casing 3, and is held by the casing 3.

In a state whre the holder 5 is held by the casing 3, the half mirror 50 is arranged on the left side with resepct to the lens unit 6 (see Fig. 5). The half mirror 50 is capable of reflecting the image light incident from the right side through the lens unit 6 rearward with the reflective surface 50A. The eye of the user can visually recognize the virtual image based on the image light reflected rearward by the reflective surface 50A. The half mirror 50 is capable of transmitting the external light incident from the front side to the rear side through the reflective surface 50A.

An upper surface of the upper wall 56 (see Fig. 6) of the holder 5 contacts a lower surface of the protruding prtion 310 of the upper wall 31 of the casing 3. The positions of the left end 31A of the upper wall 31 of the casing 3 and the left end 56A of the upper wall 56 of the holder 5 substantially coincide with each other. Accordingly, the positions 31P and 31Q of the left end 31A and the positions 56P and 56Q of the left end 56A substantially coincide with each other, respectively. The upper wall 56 of the holder 5 functions as a lower part of the protruding prtion 310 of the upper wall 31 of the casing 3. It is noted that, as described above, the upper wall 56 of the holder 5 is arranged to extend over the both sides, in the right-left direction, of the reflective surface 50A of the half mirror 50. Therefore, the protruding portion 310 of the upper wall 31 of the casing 3 is also arranged to extend over the both sides, in the right-left direction, of the reflective surface 50A of the half mirror 50.

The half mirror 50 is arranged below the protruding portion 310 of the upper wall 31 of the casing 3. The half mirror 50 is fixed with the adhesive agent spread betwwen the two first holding parts 57 with being contacted with the upper wall 56 of the holder 5. Therefore, even when not supported from below, the position of the half mirror 50 in the up-down direction is positioned based on the lower surface of the protruding portion 310 of the upper wall 31 of the casing 3.

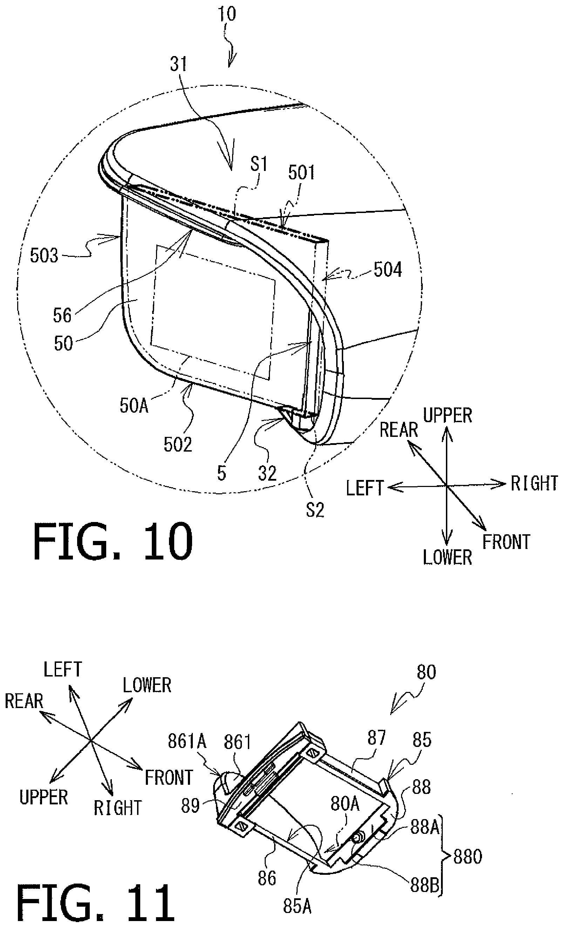

As shown in Fig. 10, the upper end 501 of the half mirror 50 overlaps the upper wall 31 of the casing in the up-down direction over an entire area in the right-left direction. In the following description, a surface area where the upper wall 31 and the half mirror 50 overlap in the up-down direction will be referred to as a "first surface area S1." In this case, the first surface area S1 coincides with a surface area of the upper end 501 of the half mirror 50. Regarding the lower end 502 of the half mirror 50, only a part of a neighborhood of the right end thereof oaverlaps the lower wall 32 in the up-down direction. In the following description, a surface area where the lower wall 32 and the half mirror 50 overlap in the up-down direction will be referred to as a second surface area S2. In this case, the second surface area S2 is smaller than the first surface area S1.

### < Usage Example of HMD 1 >

An example of usage of the HMD 1 will be described. Initially, the user fixes the mounting fixture 8 of the HMD 1 onhis/her head. The user holds the image display device 10 and the connection fixture 9 and adjusts positions thereof so that the half mirror 50 is located in front of the left eye. At this stage, the ball joints 21 and 22 enables the image display device 10 to be located, with respect to the mounting fixture 8, at an appropriate position.

On the liquid crystal panel 72B of the image unit 7 of the image display device 10, an image is displayed. The image light of the displayed image passes leftward through the glass substrate 72A and the first holding member 71, and is emitted leftward from the image unit 7. The image light emitted from the image unit 7 passes leftward through the plurality of lenses of the lens unit 6, and is emitted leftward from the lens unit 6. The reflective surface 50A of the half mirror 50 reflects the image light emitted from the lens unit 6 rearward. Then the image light enters the left eye of the user. The reflective surface 50A of the half mirror 50 allows the external light incident from the front side to pass through rearward. With this configuration, the user recognizes, on the image display device 10 of the HMD 1, the scenery in the front side and the virtual image in a superimposed manner.

The user rotates the operation part 41 of the adjustment mechanism 4. In association with rotation of the operation part 41, the lens unit 6 moves in the right-left direction. A distance between the plurality of lenses held by the lens unit 6 and the image unit 7 changes in association with rotation of the operation part. It is noted that, when the distance between the plurality of lenses and the image unit 7 is changed, the spread angle of the image light, which forms the virtual image visually recognized by the user, is also changed. Accordingly, the user can perform the focusing adjustment by rotating the operation part 41.

### < Main Functions and Effects of Present Embodiment >

As above, the casing 3 of the HMD 1 has the upper wall 31 and the lower wall 32. The upper sides and the lower sides of the lens unit 6 and the image unit 7 are covered with the main part 311 of the upper wall 31 and the lower wall 32. The half mirror 50 reflects the image light emitted from the liquid crystal panel 72B of the image unit 7 with the reflective surface 50A. When the image light reflected by the reflective surface 50A is emitted toward the eye of the user, the user can recognize the image.

The lower part of the protruding portion 310 of the upper wall 31 of the casing 3 is configured to be integral with the upper wall 56 of the holder 5. The half mirror 50 is fixed to the two first holding parts 57 with the adhesive agent spread therebetween with being contacted with the upper wall 56 of the holder 5. That is, the half mirror 50 is positioned by the lower surface of the protruding portion 310 of the upper wall 31. Accordingly, in the HMD 1, the position of the half mirror 50 in the up-down direction with respect to the casing 3 of the image display device 10 can be stabilized. The lengths of the two first holding parts 57 are substantially equal to the length of the upper end 501 of the half mirror 50. That is, the half mirror 50 is held by the upper wall 56 with the two first holding parts 57 over an entire length of the upper end 501. Accordingly, in the HMD 1, the user's visibility of the image light can be maintained by further stabilizing the position of the half mirror 50 in the font-rear and right-left directions with respect to the casing 3.

The protruding portion 310 of the upper wall 31 of the casing 3 is arranged to extend over both sides, in the right-left direction, of the reflective surface 50A of the half mirror 50. According to this configuration, in the HMD 1, it is possible to suppress an external impact from directly acting on the half mirror 50 with the protruding portion 310 of the upper wall 31. Therefore, in the HMD 1, it is possible to suppress displacement of the position of the half mirror 50 with respect to the casing 3 due to the external impact with the protruding protion 310 of the upper wall31.

In the HMD 1, the second surface area S2 of the lower wall 32 of the casing 3 which overlaps the half mirror 50 in the up-down direction is smaller than the first surface area S1 of the upper wall 31 of the casing 3 which overlaps the half mirror 50 in the up-down direction (see Fig. 8).It is concerned, for example, that the user of the HMD 1 tends to look downward into the mirror to see the image while working, and the casing or the lower part of the holding parts may be within the viewing field. However, the HMD 1 is capable of exposing a relatively wide range of the lower end 502 side of the harl mirror 50 in comparison with a case where the first surface area S1 and the second surface area S2 are substantially the same. Therefore, when the user directs the viewing field downward in a state where the HMD 1 is being worn by the user, it is hardly likely that the lower wall 32 of the casing 3 of the image display device 10 obstacles the viewing field. Accordingly, the HMD 1 enables to secure the user's visibility even when the user directs the viewing filed downward.

The HMD 1 has the mounting fixture 8 and the connection fixture 9. The connection fixture 9 makes the half mirror 50 of the image display device 10 located in front of the left eye of the user in a state where the mounting fixture 8 is worn on the head of the user. It is noted that, the casing 3 of the image display device 10 is supported by the connection fixture 9 through the connection member 27 and the ball joint 22 on the right side with respect to the center 3C in the right-left direction. With this configuration, when the image display device 10 is arranged in front of the left eye of the user, the connection fixture 9 hardly obstructs the user. Accordingly, the user can easily arrange the half mirror 50 of the image display device 10 in front of the left eye and visually recognize the image.

The HMD 1 is configured such that the half minor 50 can be positioned on the lower surface of the protruding portion 310 of the upper wall 31 of the caing 3 to stabilize the position of the half mirror 50 in the up-down direction with the half mirror 50 of the image display device 10 being arranged in front of the left eye of the user. The protruding portion 310 of the upper wall 31 is arranged to extend over both sides, in the right-left direction, of the reflective surface 50A of the half mirror 50. Accordingly, in the HMD 1, when in use, it is possible to suppress an external impact from directly acting on the half mirror 50 with the protruding portion 310. Therefore, in the HMD 1 configured such that the half mirror 50 is arranged in front of the left eye of the user, displacement of the half mirror 50 with respect to the casing due to the external impact can be suppressed with the protruding portion 310 of the upper wall 31.

### < Modifications >

The present discloures need not be limilted to the above-described embodiment, but can be modified in various ways. Hereinafter, first through fourth modifications and further modifications will be described.

### < First Modification >

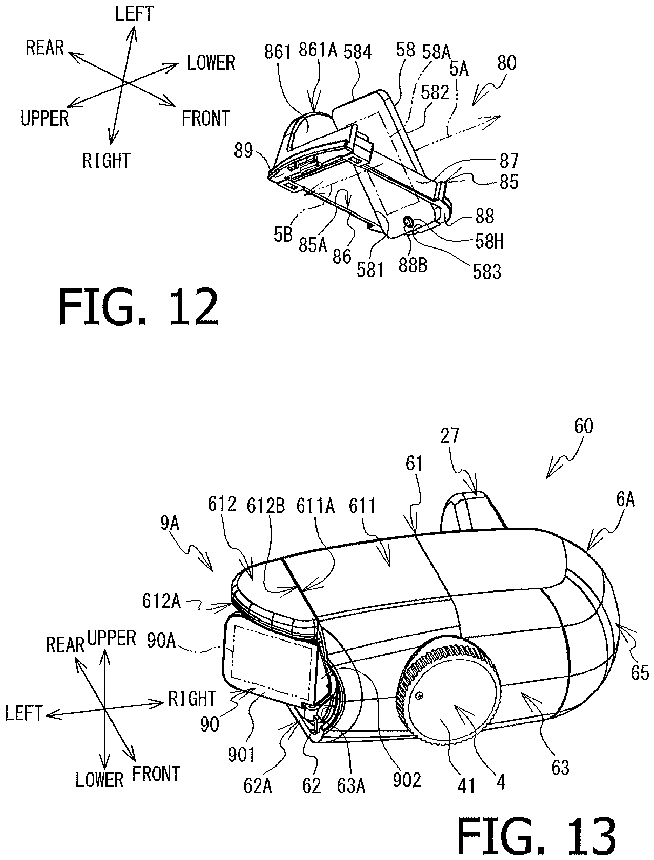

In the first modification, the HMD 1 has a holder 80 and a half mirror 58 (see Figs. 11 and 12) instead of the holder 5 and the half mirror 50 (see Figs. 6 - 9). The components other than the holder 80 and the half mirror 58 (i.e., the components of the image display device 10 other than the mounting fixture 8, the connection fixture 9, the ball joints 21 and 22, the holder 80 and the half mirror 58) are the same as those in the above-described embodiment, and description thereof will be omitted hereafter.

Referring to Figs. 11 and 12, the holder 80 will be described. The holder 80 has a base part 85 and an upper wall 861. The base part 85 has a substantially plate-like shape having a rectangular opening 85A. Surfaces of the base part 85 are directed in the right-left diretions. The base part 85 has an upper frame 86, a lower frame 87, a front frame 88 and a rear frame 89. The upper fram 86, the lower frame 87, the front frame 88 and the rear frame 89 respectively correspond to portions of the base part 85 on an upper side, a lower side, a front side and a rear side of the opening 85A. It should be noted that the upper frame 86, the lower frame 87, the front frame 88 and the rear frame 89 of the based part 85 correspond to the upper frame 52, the lower frame 53, the front frame 54 and the rear frame 55 of the base part 51 of the holder 5 (see Figs. 6 and 7) of the above-described embodiment, respectively.

As shown in Fig. 11, the rear surface of the front frame 88 is inclined with respect to a direction parallel with the righ-left direction. In the following description, the rear surface of the front frame 88 will be referred to as a "contacting part 88A." A direction 80A which perpendicularly intersects with the contacting part 88A and extends rearward is directed to a diagonally right rear direction. At a center, in the up-down direction, of the contacting part 88A, a projection 88B is provided. The projection 88B has a cylindrical shape. The projecting part 88B protrudes from the contacting part 88A along the direction 80A perpendicular to the contacting part 88A. In the following description, the contacting part 88A and the projection 88B will be collectively referred to as a "second holding part 880."

The upper wall 861 extends leftward from the upper end of the based part 85. The upper wall 861 has a plate-like shape. Surfaces of the upper wall 861 face in the up-down directions. The upper frame 86 corresponds to a right end part of the upper wall 861. It is noted that the upper wall 861 corresonds to the uppwer wall 56 of the holder 5 (see Figs. 6 and 7) of the above-described embodiment. The shape of the left end 861A of the upper wall 861 is substantially the same as the shape of the left end 31A of the upper wall 31 of the casing 3. It is noted that, differently from the upper wall 56 of the above-described embodiment, members corresponding to the two first holding parts 57 are not provided to the upper wall 861.

As shown in Fig. 12, the half mirror 58 has a substantially rectangular shape. The half mirror 58 has a rectangular reflective surface 58A. The half minor 58 is arranged below the upper wall 861 of the holder 80. The upper wall 861 of the holder 80 covers an upper side of the half minor 58. The upper end 581 of the half mirror 58 is adhered to the upper wall 861 with adheseive agent. With this configuration, the position of the half mirror 58, in the up-down direction, with respect to the holder 80 is retained by the upper wall 861.

A neighborhood of the right end 583 of the front surface of the half mirror 58 contacts the contacting part 88A of the front frame 88 of the holder 80. The half minor 58 has a hole 58H at a center, in the up-down direction, at the neighborhood of the right end 583. The projection 88B of the holder 80 is fitted in the hole 58H of the half mirror 58. With this configuration, a position of the half mirror 58 in the right-left direction with respect to the holder 80 is retained by the second holding part 880.

A direction which perpendicularly intersects with each surface of the half mirror 58 is inclined with respect to the front-rear direction and the right-left direction. A direction which perpendicularly intersects with the front surface of the half mirror 58 and extends frontward, and a direction which perpendicularly intersects with the rear surface of the half mirror 58 and extends rearward coincide with directions 5A and 5B in relation to the half mirror 50 held by the holder 5 (see Figs. 6 and 7) according to the above-described embodiment, respectively. The upper wall 861 of the holder 80 is arranged to extend over both sides, in the right-left direction, of the reflective surface 58A of the half mirror 58.

The holder 80 is attached below the protruding portion 310 of the upper wall 31 of the casing 3 (see Figs. 3 and 4). The way the holder 80 is attached to the casing 3 is the same the way the holder 5 is attached to the casing 3 in the above-described embodiment. In a state where the holder 80 is attached to the casing 3, the upper surface of the upper wall 861 contacts the lower surface of the protruding portion 310 of the upper wall 31 of the casing 3. The upper wall 861 of the holer 80 functions as a lower part of the protruding portion 310 of the upper wall 31 of the casing 3. Accordingly, the protruding portion 310 of the upper all 31 of the casing 3 is arranged to extend over both sides, in the right-left direction, of the reflective surface 58A of the half mirror 58.

Since the upper end 581 of the half mirror 58 is adhered with the upper wall 861 of the holder 80, even when not supported from below, the half mirror 58 does not fall downward from the casing 3 due to the force of gravity. That is, the position of the half mirror 58 in the up-down direction is positioned based on the lower surface of the protruding portion 310 of the upper wall 31 of the casing 3. Further, the right end 583 of the half mirror 58 is held by the second holding part 880 (see the contacting part 88A and the projection 88B in Fig. 11) of the holder 80. Therefore, as the holder 80 is held by the casing 3, the position, in the right-left direction, of the half mirror 58 with respect to the casing 3 is also retained.

The upper end 581 of the half miiror 58 overlaps the upper wall 31 of the casing 3 over the entire area, in the up-down direction. On the other hand, regarding the lower end 582 of the half mirror 58, only a part of a neighborhood of the right end overlaps the lower wall 32 in the up-down direction. Therefore, a surface area of a portion of the lower wall 32 overlapping the half mirror 58 is smaller than a surface area of a portion of the upper wall 31 overlapping the half mirror 58. It is noted that the surface area of the portion of the upper wall 31 overlapping the half mirror 58 corresponds to the first surface area S1 (see Fig. 8) in the above-described embodiment. The surface area of the portion of the lower wall 32 overlapping the half mirror 58 corresponds to the second surface area S2 (see Fig. 8) of the above-described embodiment.

### < Main Functions and Effects of First Modification >

As described above, in the first modification, the holder 80 has the second holding part 880. The second holding part 880 has the contacting part 88A and the projection 88B. The neighborhood of the right end 583 of the half mirror 58 contacts the contacting part 88A. In the hole 58H of the half mirror 58, the projection 88B is fitted. With the above configuration, the position of the half mirror 58, in the right-left direction, with respect to the holder 80 is retained by the second holding part 880. As the holder 80 is retained by the casing 3 of the image display device 10, the position of the half mirror 58, in the right-left direction, with respect to the casing 3 is retained. Accordingly, in the HMD 1, the position of the half mirror 58, in the up-down direction and in the right-left direction, with respect to the casing 3 can be stabilized. Accordingly, in the HMD 1, the user's visibility of the image light can be maintained.

The second holding part 880 is configured such that, by fitting the projection 88B in the hole 58H of the half mirror 58, movement in the rotational direction about the fist direction of the half mirror 58 with respect to the holder 80 is restricted. Therefore, even when an external strong impact acts on the half mirror 50 with the holder 80 being detached from the casing 3, it is possible to retrict the half mirror 58 being displaced with respect to the holder 80.

In the first modification, the contacting part 88A of the holder 80 and a portion of the half mirror 58 contacting the contacting part 88A may be adehered with adhesive agent. With the portion contacting the contacting part 88A being adheared, a forace may be applied to the half mirror 58 in a direction where the half mirror 58 is press-contacted to the upper wall 861. In such a case, even if the upper end 581 of the half mirror 58 is not adhered to the upper wall 861 with adhesive agent, the position of the half mirror 58, in the up-down direction, with respect to the holde 80 is retained by the upper wall 861.

### < Second Modification >

In the second modification, the HMD 1 has an image display device 60 (see Figs. 13 - 15) instead of the image disaplay device 10. The components except for the image display device 60 (i.e., the mounting fixture 8, the connection ficture 9, the ball joings 21 and 22) and the lens unit 6 and the image unit 7 accommodated in the image display device 60 are the same as those in the abaove-described embodiment, and description thereof will be omitted hereafter.

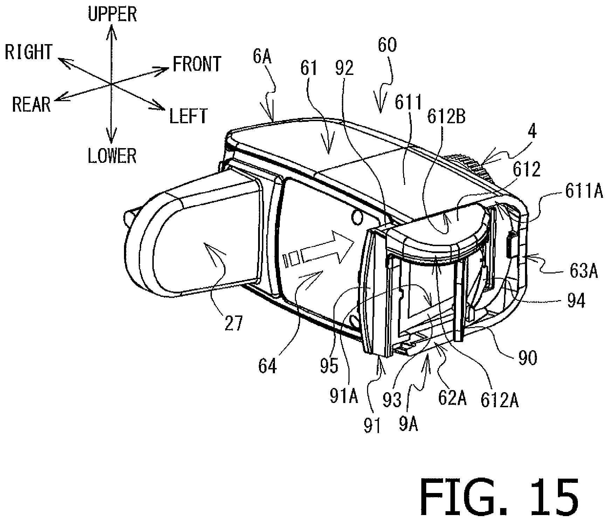

Referring to Figs. 13 - 15, the image display device 60 will be described. The image display device 60 has a casing 6A. The casing 6A has a substantially rectangular parallelepiped shape with rounded corners. The casing 6A has a hollow box shape. Walls of the casing 6A on an upper side, lower side, front side, rear side and right side will be referred to as an upper wall 61, a lower wall 62, a front wall 63, a rear wall 64 (see Fig. 15) and a right wall 65, respectively. The upper wall 61, the lower wall 62, the front wall 63, the rear wall 64 and the right wall 65 corespond to the upper wall 31, the lower wall 32, the front wall 33, the rear wall 34 and the right wall 35 (see Fig. 5) of the casing 3 of the image display device 10 of the above-described embodiment, respectively.

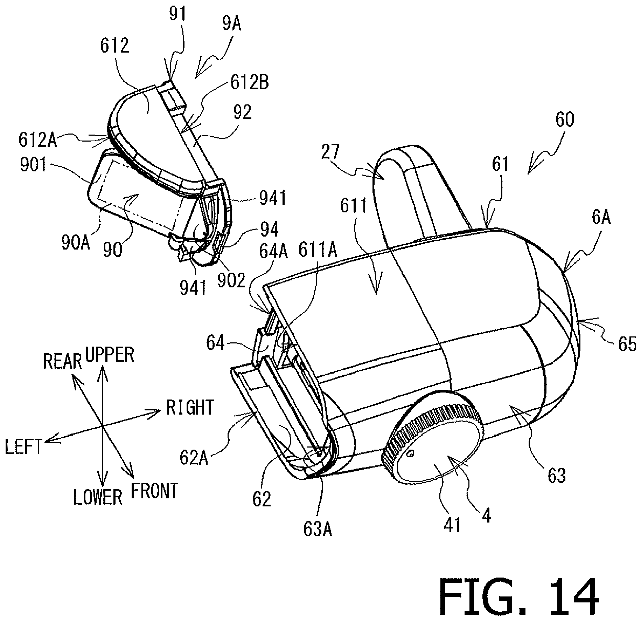

The upper wall 61 has an upper main wall 611 and an upper protruding wall 612. The upper main wall 611 part of the upper wall 61 corresponds to the main part 311 (see Fig. 3) of the upper wall 31 of the image display device 10 of the above-described embodiment. The upper protruding wall 612 part of the upper wall 61 corresponds to the protruding portion 310 of the upper wall 31 of the image display device 10 of the above-described embodiment. Unlike the image display device 10, in the image display device 60, the upper wall 61 can be divided into the upper main wall 611 and the upper protruding wall 612 (see Fig. 14). The upper main wall 611 and the upper protruding wall 612 are aligned in the right-left direction. The upper main wall 611 is arranged on the right side with respect to the upper protruding wall 612. The upper main wall 611 and the upper protruding wall 612 integrally form a common palte-like body. A left end 611A of the upper main wall 611 and a right end 612B of the upper protruding wall 612 contact each other. Each of the left end 611A and the right end 612B linearly extends in the front-rear direction.

As shown in Fig. 14, positions, in the right-left direction, of the left end 611A of the upper main wall 611 and the left end 62A of the lower wall 62 are coincident with each other. The upper main wall 611 and the lower wall 62 face each other in the up-down direction. A left end 63A of the front wall 63 extends between the left ends 611A and 62A. The left end 63A is depressed rightward as approaching closer to the center in the up-down direction. The front wall 63 and the rear wall 64 face each other in the front-rear direction. The left end of the casing 6A is opened. The lens unit 6 and the image unit 7 (see Fig. 5) are arranged between the upper main wall 611 and the lower wall 62 in the up-down direction, and between the front wall 63 and the rear wall 64 in the front-rear direction. The adjustment mechanism 4 is rotatably held by the front wall 63. As shown in Fig. 13, the upper protruding wall 612 protrudes leftward with respect to the upper main wall 611, the lower wall 62, the front wall 63 and the rear wall 64. The shape of the left end 612A of the upper protruding wall 612 is substantially the same as the shape of the left end 31A (see Fig. 3) of the upper wall 31 of the above-described embodiment.

As shown in Fig. 14, the holder 9A is detachably attached to the casing 6A. The holder 9A has a base part 91 and an upper protruding wall 612. The base part 91 is substantially plate-shaped formed with a rectangular opening 91A (see Fig. 15). Each surface of the base part 91 is directed in the right-left direction. The base part 91 has an upper frame 92, a lower frame 93 (see Fig. 15), a front frame 94, and a rear frame 95 (see Fig. 15). The upper frame 92, the lower frame 93, the front frame 94 and the rear frame 95 correspond to parts of the base part 91 on an upper side, a lower side, a front side and a rear side of the opening 91A, respectively. It is noted that the upper frame 92, the lower frame 93, the front frame 94 and the rear frame 95 of the base part 91 correspond to the upper frame 52, the lower frame 53, the front frame 54 and the rear frame 55 of the base part 51 of the holder 5 (see Figs. 6 and 7) of the above-described embodiment, respectively. The upper protruding wall 612 extends leftward from the upper end of the base part 91. The upper frame 92 corresponds to the right end part of the upper protruding wall 612. The base part 91 and the upper protruding wall 612 parpendicularly intersects with each other. Each surface of the upper protruding wall 612 is directed in the up-down direction. It is noted that, unlike the upper wall 56 of the above-described embodiment, members corresponding to the two first holding parts 57 are not provided to the upper protruding wall 612. On the front frame 94, two holding parts 941 protruding leftward are provided.

The half mirror 90 has a first section 901 and a second section 902. The first section 901 has a substantially rectangular shape. The first section 901 has a rectangular reflective surface 90A on a rear surface thereof. The first section 901 is arranged below the upper protruding wall 612 of the holder 9A. A direction which perpendicularly intersects with each surface of the first section 901 is inclined with respect to the front-rear direction and the right-left direction. A direction which perpendicularly intersects with the front surface of the first section 901 and extends frontward, and a direction which perpendicularly intersects with the rear surface of the first section 901 and extends rearward respectively coincide with the directions 5A and 5B in relation to the half mirror 50 held by the holder 5 (see Figs. 6 and 7) of the above-described embodiment. The upper protruding wall 612 is arranged to extend over both sides, in the right-left direction, of the reflective surface 90A of the first section 901. The upper protruding wall 612 covers the first section 901 from above. The upper end of the first section 901 is adhered to the lower surface of the upper protruding wall 612 with adhesive agent. With this configuration, the position, in the up-down direction, of the half mirror 90 with respect to the holder 9A is retained by the upper protruding wall 612.

The second section 902 of the half mirror 90 is bent and extend frontward from the front end of the first section 901. Each surface of the second section 902 is directed in the right-left direction. The right surface of the second section 902 contacts the left surface of the front frame 94 of the holder 9A. The front end of the second section 902 contacts the rear ends of the two holding parts 941 of the front frame 94 from the rear side. With this configuration, the position of the half mirror 90 in the right-left direction with respect to the holder 9A is retained by the two holding parts 941 of the front frame 94.

As shown in Fig. 15, the holder 9A with the half mirror 90 held thereby is attached to the left side of the casing 6A from the rear side. Fig. 15 shows an intermediate state in which the holder 9A is being attached to the casing 6A. In a state where the holder 9A is attached to the casing 6A, the base part 91 of the holder 9A is arranged slightly on the right side with respect to the left end of the casing 6A. the upper frame 92 of the holder 9A is arranged slightly on the right side with respect to the left end 611A of the upper main wall 611 of the casing 6A. the lower frame 93 of the holder 9A is arranged slightly on the right side with resepct to the left end 62A of the lower wall 62 of the casing 6A. The front frame 94 of the holder 9A is arranged slightly on the right side with respect to the left end 63A of the front wall 63 of the casing 6A. It is noted that the rear frame 95 of the base part 91 of the holder 9A contacts the left end 64A (see Fig. 14) of the rear wall 64 of the casing 6A from the left side. The right end 621B of the upper protruding wall 612 of the holder 9A and the left end 611A of the upper main wall 611 of the casing 6A contact each other. The upper protruding wall 612 of the holder 9A and the upper main wall 611 of the caing 6A integrally configures the upper wall 61 of the casing 6A.

Since the upper end of the first section 901 of the half mirror 90 is adhered to the lower surface of the upper protruding wall 612, even if not supported from below, the half mirror 90 does not fall downward from the casing 6A due to the force of gravity. That is, the position, in the up-down direction, of the half mirror 90 is positioned based on the lower surface of the upper protruding wall 612. It is noted that, as described above, the upper protruding wall 612 and the upper main wall 611 integrally configures the upper wall 61. Accordingly, the position, in the up-down direction, of the half mirror 90 is positioned based on the upper wall 61 of the casing 6A. Further, the position, in the right-left direction, of the second setion 902 of the half mirror 90 is retaiend by the two holding parts 941 of the front frame 94 of the holder 9A. Therefore, as the holder 9A is held by the casing 6A, the position, in the right-left direction, of the half mirror 90 with respect to the casing 6A is also retained.

The upper end of the half mirror 90 overlaps the upper protruding wall 612 in the up-down direction over the entire length. On the other hand, retgarding the lower end of the half mirror 90, only a part of a neighborhood of the right end overlaps the lower wall 62 in the up-down direction. As described above, the upper protruding wall 612 and the upper main wall 611 integrally configure the upper wall 61. Therefore, a surface area of a portion of the lower wall 62 overlapping the half mirror 90 is smaller than a surface area of a portion of the upper wall 61 overlapping the half mirror 90. It is noted that the surface area of the portion of the upper wall 61 overlapping the half mirror 90 corresponds to the first surface area S1 (see Fig. 8) of the above-described embodiment. The surface area of the portion of the lower wall 62 overlapping the half minor 90 corresponds to the second surface area S2 (see Fig. 8) of the above-described embodiment.

### < Main Functions and Effects of Second Modifiation >

As described above, in the second modification, the lower frame 93 of the base part 91 of the holder 9A is arranged on the right side with respect to the left end 62A fo the lower wall 62 of the casing 6A. The base part 91 of the holder 9A does not protrude leftward with respect to the left end 62A of the lower wall 62. Accordingly, even when the user of the HMD 1 directs the viewing field downward, the base part 91 hardly obstructs the viewing field. Therefore, in the HMD 1, the user's visibility can be secured.

When the holder 9A is detached from the casing 6A, it is likely that the half mirror 90 may easily receive an impact. In this regard, according to the second modification, the upper protruding wall 612 is provided to the holder 9A, and the half mirror 90 is positioned by the upper protruding wall 612. The upper protruding wall 612 is arranged to extend over both sides, in the right-left direction, of the reflective surface 90A of the first section 901. Therefore, it is possible to suppress an external impact directly acting on the half mirror 90 with the upper protruding wall 612 even when the holder 9A is detached from the casing 6A.

### < Third Modification >

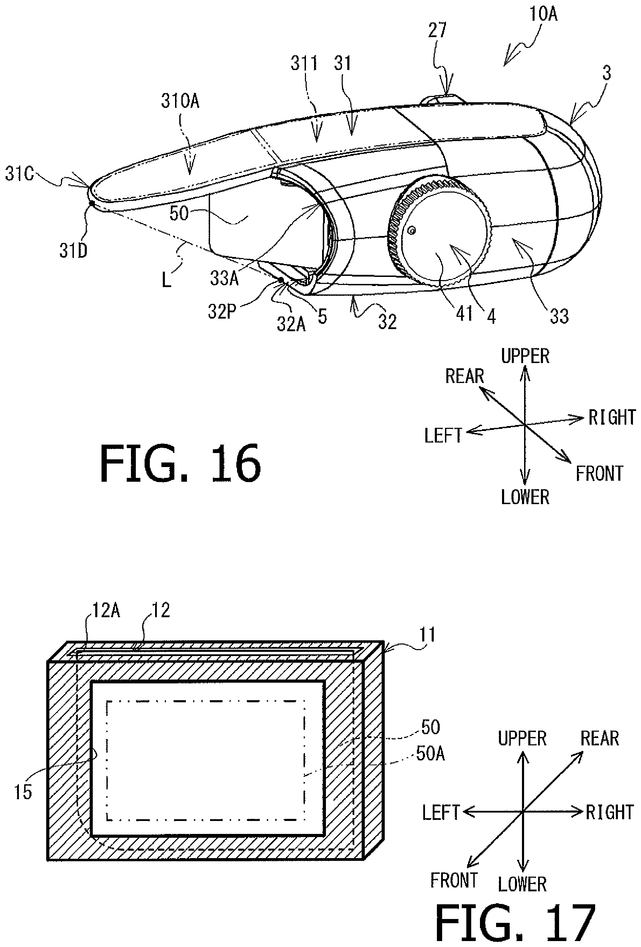

In the third modification, the HMD 1 has an image display device 10A (see Fig. 16) instead of the image display device 10. The image display device 10A is different from the iamge display device 10 (see Fig. 3 and the like) of the above-described embodiment by the length, in the right-left direction, of the protruding portion of the upper wall. The components other than the image display device 10A (i.e., the mounting fixture 8, the connection fixture 9, the ball joints 21 and 22) and the lens unit 6 and the image unit 7 accommodated in the image display device 10A are the same as those in the above-described embodiment, and description thereof will be omitted hereafter. Corresponding configurations between the image displaying devices 10 and 10A are assigned with the same reference numbers and description thereof will be omitted.

The upper wall 31 of the casing 3 has a protruding portion 310A and a main part 311. The protruding prtion 310A corresponds to a portion of the upper wall 31 protruding leftward with respect to the lower wall 32, the front wall 33 and the rear wall 34. A length, in the right-left direction, of the protruding portion 310A is approximately half a length, in the right-left direction, of the main part 311.

A leftmost position of the left end 31C of the upper wall 31 will be referred to as a "position 31D." A leftmotst position of the left end 32A of the lower wall 32 will be referred to as a "position 32P." "An imaginary straight line connecting the positions 310 and 32P will be defined as an "imaginary straight line L." In this case, all the parts of the half mirror 50 are arranged on the right side with respect to the imaginary straight line L.

### < Main Functions and Effects of Third Modification >

According to the above configuration of the HMD 1, it is possible to effectively suppress with the upper wall 31 and the lower wall 32 that an external object contacts the half mirror 50. Therefore, in the HMD 1, displacement of the position of the half mirror 50 in response to contact of an external object to the half mirror 50 can be appropriately suppressed with the upper wall 31 and the lower wall 32 of the casing.

### < Fourth Modification >

As shown in Fig. 17, in the fourth modification, the HMD 1 further has a cover member 11 configured to cover the half mirror 50. The conver member 11 has a rectangular parallelepiped shape. The cover member 11 is formed of elasitic material such as a rubber. The conver member 11 has an accommodating part 12 capable of accommodating the half mirror 50. An upper end of the accommodating part 12 communicates with an opening 12A defined at an upper end of the conver member 11. The half mirror 50 is accommodated in the accommodating part 12 through the opening 12A. In a state where the half mirror 50 is accommodated in the accommodating part 12, the half mirror 50 is surrounded by the cover member 11.

The conver member 11 has openings 15 on both of front and rear surfaces. The openings 15 communicate with the accommodating part 12. The size of the openings 15 is slightly larger than the reflective surface 50A of the half mirror 50. In a sate where the half mirror 50 is accommodated in the cover member 11, the reflective surface 50A is arranged inside the opening 15. The reflective surface 50A is not covered with the cover member 11 even in the state where the half mirror 50 is accommodated in the accommodating part 12.

In the fourth modification, in the state where the half mirror 50 is covered with the cover member 11, the half mirror 50 is held by the holder 5. The holder 5 holding the half mirror 50 convered with the cover member 11 is held by the image display device 10. It is noted that transparency of the cover member 11 is higher than the transparency of the upper wall 31 of the casing 3. For example, the transparencey of the half mirror 50 is approximately 50 %, and the transparency of the upper wall 31 is approximately 0 %. The reflective surface 50A of the half mirror 50 is not covered with the cover member 11. Therefore, the reflective surface 50 is capable of reflecting the image light, which is emitted by the lens unit 6, to the rear side. The reflective surface 50A allows the external light incident from the front side to pass therethrough rearward. With this configuration, the user recognizes, on the image display device 10 of the HMD 1, the scenery in the front side and the virtual image in a superimposed manner.

### < Main Functions and Effects of Fourth Modifiation >

As described above, the half mirror 50 is surrounded by the cover member 11. Therefore, even if in a state where wide areas of the left end and the lower end of the half mirror 50 are exposed, an impact resistant property of the half minor 50 can be maintained with the cover member 11.

It is noted that, in order to suppress the cover member 11 obstructing the viewing field of the user when the half mirror 50 is covered with the cover member 11, it is preferable that the transparencey of the conver member 11 is high. On the other hand, regarding the upper wall 31 of the casing 3, it is preferable that the transparency thereof is lower so that the external Light is prevented from entering the half minor 50. In this regard, in the HMD 1, the transparency of the cover member 11 is higher than the transparency of the upper wall 31. For example, the transparency of the conver member 11 is approximately 50 %, while the transparency of the upper wall 31 is approximately 0 %. According to this configuration, in the HMD 1, the cover member 11 can be suppressed from obstructing the viewing field of the user, while incidence of the external light on the half mirror 50 can be suppressed with the upper wall 31.

### < Other Modifications >

The casing 3 of the image display device 10 may only have the upper wall 31 and the lower wall32. For example, the casing 3 may not have the rear wall 34. Instead of the half mirror 50, another member capable of reflecting light (e.g., a prism) may be used. The half mirror 50 may be directly positioned by the protruding porition 310 of the upper wall 31 of the casing 3. In such a case, the HMD 1 may not have the holder 5. A method of positionig the half mirror 50 with respect to the protruding portion 310 of the upper wall 31 need not be limited to the method according to the above-described embodiment. For example, the half mirror 50 may be positioned with resepct to the protruding portion 310 of the upper wall 31 as an upward urging force is applied. Concretely, for example, an urging member configured to appliy an upward urging force to the lower end 502 of the half mirror 50 may be provided at a neighborhood of the left end 32A of the lower wall 32. In such a case, a member to position the uppe end 501 of the half mirror 50 with respect to the upper wall 31 may not be provided to the upper wall 31.

The half mirror 50 is configured such that the upper end 501 is held by the two first holding parts 57 provided to the upper wall 56 of the holder 5. The two first holding parts 57 protrude downward from the lower surface of the upper wall 56. Whereas, on the lower surface of the upper wall 56 of the holder 5, a groove may be formed between the two first holding parts 57. The upper end 501 of the half mirror 50 may be fitted in the groove. The two first holding parts 57 may not be formed on the upper wall 56. The right end 504 of the half mirror 50may be adhered, with adhesive agent or the like, to the front frame 54 of the holder 5. A hole may be formed in the neighborhood of the right end 504 of the half mirror 50. A projection may be formed on the front frame 54 of the holder 5. A position of the right end 504 of the half mirror 50 may be fixed to the casing 3 through the holder 5 as the projection of the front frame 54 is fitted in the hole of the half mirror 50.

The two first holding parts may be provided to the lower surface of the upper wall 861 of the holer 80. The upper end 581 of the half mirror 58 may be held to the upper wall 861 by the two first holding parts. In such a case, the upper end 581 of the half mirror 58 may not be adhered to the upper wall 861. The right end 583 of the half mirror 58 may be adhered to the contacting part 88A of the second holding part 880 of the holder 80 with adhesive agnet or the like.

In the above configurataion, the connection member 27 connecting the image display device 10 and the connection fixture 9 may be connected at the same psotion as the center 3C, in the right-left direction, of the rear wall 34 of the casing 3, or at a position on the left side with respect to the center 3C. The HMD 1 may be configured such that the upper end of the connection fixture 9 is directly connected to glasses, a hat or the like worn by the user. In such a case, the HMD 1 may not have the mounting fixture 8 or the ball joint 21.

In the above configureation, the conve member 11 covers the entire part of the half mirror 50 except for the reflective surface 50A. However, the conver member 11 may cover only a part of the half mirror 50. For example, the cover member 11 may cover only the lower end 502 and the left end 503 of the half mirror 50.

### < Miscellaneous >

The up-down direction is an example of a "first direction" of the present disclosures. The right-left direction is an example of a "second direction" of the present disclosures. The left side is an example of "one of the second direction" of the present disclosures. The right side is an example of "another of the second direction" of the present disclosures. The front-rear direction is an example of a "third direction" of the present disclosures.

The rear side is an example of "one of the front-rear direction" of the present disclosures. The upper walls 31 and 61 are examples of a "first wall" of the present disclosures. The lower walls 32 and 36 are examples of a "second wall" of the present disclosures. The image unit 7 is an example of an "image light generator" of the present disclosures. The half mirrors 50 and 90 are examples of a "reflective member" of the present dislcosures. The upper main wall 611 is an example of a "first main wall" of the present disclosures. The upper protruding wall 612 is an example of a "first protruding wall" of the present disclosures.

### EXPLANATION OF REFERENCE SIGNS

- 1:: HMD
- 3, 6A, 9A:: casing
- 5, 80:: holder
- 6:: lens unit
- 7:: image unit
- 8:: mounting fixture
- 9:: connection fixture
- 10, 10A, 60:: image display device
- 11:: cover member
- 31, 61:: upper wall
- 32, 62:: lower wall
- 50, 58, 90:: half mirror
- 50A, 58A,: 90A:reflective surface
- 57:: first holding part
- 58H:: hole
- 62A:: left end
- 88A:: contacting part
- 88B:: projection
- 310, 310A:: protruding portion
- 611:: upper main wall
- 612:: upper protruding wall
- 880:: second holding part
- L:: imaginary straight line
- S1:: first surface area
- S2:: second surface area

## Claims

1. A head-mounted display, comprising:
a casing having at least a first wall and a second wall opposing to each other in a first direction;
an image light generator arranged inside the casing between, in relation to the first direction, the first wall and the second wall, and configured to emit image light in a second direction which is perpendicular to the first direction; and
a reflective member having a reflective surface to reflect the image light, the reflective surface being parallel to the first direction, wherein:
the reflective member is arranged on one side in the second direction with respect to the image light generator; and
the reflective member is configured to reflect, with the reflective surface, the image light emitted from the image light generator to one side in a third direction which intersects with both the first direction and the second direction,
wherein the first wall has a protruding protion formed to extend over both sides, in the second direction, of the reflective surface of the reflective member,
wherein a position of the reflective member in the first direction is positioned based on a second wall side surface, in the first direction, of the protruding porition, and
wherein a second surface area which is a surface area of a portion of the second wall overlapping the reflective member is smaller than a first surface area which is a surface area of a portion of the first wall overlapping the reflective member in the first direction.

2. The head-mounted display according to claim 1,
further comprising a first holding part configured to hold one of both ends, in the first direction, of the reflective member neighboring the protruding portion with respect to the protruding portion.

3. The head-mounted display according to claim 1 or 2,
further comprising a second holding part configured to hold at least one of both ends, in the second direction, of the reflective member with respect to the casing.

4. The head-mounted display according to any one of claims 1 - 3,
wherein the first wall is configured such that:
the first wall is dividable into a first main wall on another side in the second direction, and a first protruding wall on the one side in the second direction;
the image light generator is covered with the first main wall; and
the protruding portion is included in the first protruding wall,
the head-mounted display further comprising a holder detachably attached to the casing, wherein:
the one side in the first direction is formed by the first protruding wall; and
the other side in the first direction is formed by a frame arranged on the other side in the second direction with respect to the second wall, and
wherein the reflective member is positioned by the protruding portion of the first protruding wall of the holder.

5. The head-mounted display according to claim 3,
further comprising a holder detachably mounted to the casing, wherein:
the holder has the second holding part; and
the holder holds an end, on the another side in the second direction, of the reflective member with the second holding part,
wherein the second holding part has a contacting part which contacts the reflective member and a projection protruded from the contacting part, and
wherein the reflective member has a hole in which the projection is fitted.

6. The head-mounted display according to any one of claims 1-5,
further comprising:
a mounting fixture to be worn by the user; and
a connection fixture connecting the mounting fixture with the casing,
wherein the connecting fixture is provided to the casing at the other side in the second direction with respect to a center in the second direction.

7. The head-mounted display according to any one of claims 1-6,
wherein at least a part of the reflective member is convered with a cover member, and
wherein transparency of the conver member is higher than the transparency of the first wall.

8. The head-mounted display according to any one of claims 1 - 7,
wherein the reflective member is arranged on the other side in the second direction with respect to an imaginary line connecting an end part, on the one side in the second direction, of the first wall and an end part, on the one side in the second direction, of the second wall.

9. The head-mounted display according to claim 6,
wherein the casing is attached to the mounting fixture such that the first wall is closer to a top of a head of the user than the second wall.
